**Europäisches Patentamt**

**European Patent Office**

**Office européen des brevets**

(11) Veröffentlichungsnummer: **0 204 064**

**A2**

## (12) EUROPÄISCHE PATENTANMELDUNG

(21) Anmeldenummer: **86100303.6**

(22) Anmeldetag: **11.01.86**

(51) Int. Cl.⁴: **B 01 D 53/36**
**B 01 J 23/31**

(30) Priorität: **04.06.85 DE 3520024**

(43) Veröffentlichungstag der Anmeldung:
**10.12.86 Patentblatt 86/50**

(84) Benannte Vertragsstaaten:
**AT CH DE FR GB LI NL**

(71) Anmelder: **SÜD-CHEMIE AG**
**Lenbachplatz 6**
**D-8000 München 2(DE)**

(72) Erfinder: **Schneider, Michael, Dr. Dipl.-Chem.**
**Waldparkstrasse 54a**
**D-8012 Ottobrunn-Riemerling(DE)**

(72) Erfinder: **Kochloefl, Karl, Dr. Dipl.-Chem.**
**Kreuzstrasse 2**
**D-8052 Moosburg(DE)**

(72) Erfinder: **Maletz, Gerd, Dr. Dipl.-Chem.**
**Innere Regensburger Strasse 9a**
**D-8300 Landshut(DE)**

(74) Vertreter: **Reitzner, Bruno, Dr.**
**Patentanwälte Dipl.-Ing. R. Splanemann Dr. B. Reitzner**
**Tal 13**
**D-8000 München 2(DE)**

(54) **Katalysator zur Verringerung des Stickoxidgehalts von Verbrennungsabgasen.**

(57) Katalysator zur Verringerung des Stickoxidgehalts von Verbrennungsabgasen, dessen wirksame Komponente der allgemeinen Formel

$$W_a V_b E_c O_d$$

entspricht, worin E mindestens ein Element aus der Gruppe Bi, Ce, Cr, Sn, Zr, Mn darstellt, dessen Valenzstufe 4 nicht überschreitet und worin das Verhältnis

$$a : b : c = (0,1\text{-}15) : 1 : (0,1\text{-}25)$$

beträgt. Der Katalysator kann durch innige Vermischung der Metalloxide und/oder in diese überführbarer Ausgangsverbindungen hergestellt werden, wobei die Ausgangsverbindungen in fester Form oder in gelöstem Zustand verwendet werden.

EP 0 204 064 A2

Die Erfindung betrifft einen Katalysator zur Verringerung des Stickoxidgehalts von Verbrennungsabgasen.

Bei der Verbrennung fossiler Brennstoffe werden sowohl aus stickstoffhaltigen Komponenten als auch aus dem Luftstickstoff Stickoxide ($NO_x$) gebildet, welche in die Atmosphäre gelangen und eine ernste Umweltbeeinträchtigung darstellen. Insbesondere die Bildung des photochemischen "Smogs" wird auf $NO_x$ zurückgeführt. Angesichts der während der letzten Jahre ständig gestiegenen $NO_x$-Emissionen besteht ein großes Interesse daran, den $NO_x$-Gehalt von Verbrennungsabgasen zu reduzieren.

Es ist bekannt, daß Stickoxide durch $NH_3$ in $N_2$ und $H_2O$ überführt werden können und daß diese Reaktion in einem weiten Temperaturbereich ziemlich selektiv ist, d.h. in Gegenwart eines hohen Sauerstoffüberschusses (wie er in Verbrennungsabgasen gewöhnlich vorhanden ist) ohne allzu hohe Ammoniakverluste infolge Oxidation abläuft, so daß nur relativ geringe Mengen an Reduktionsmittel erforderlich sind. Es sind weiterhin bereits verschiedene Katalysatoren für die $NO_x$-Reduktion mittels Ammoniak bekannt.

In der DE-PS 26 19 662 sowie in der DE-PS 26 39 848 werden Katalysatoren mit Eisenoxid als wirksamem Bestandteil beschrieben. Die Anwendung dieser Katalysatoren ist jedoch weitgehend beschränkt auf die Entstickung von Abgasen, die nahezu frei von Schwefeloxiden ($SO_x$) sind, da sie mit letzteren bereitwillig unter Sulfatbildung und Herabsetzung der katalytischen Aktivität reagieren.

Zwar ist aus der DE-PS 25 25 880 bekannt, daß auch Eisensulfat katalytische Wirksamkeit bei der $NO_x$-Reduktion mit Ammoniak besitzt, doch ist diese infolge seiner ausgeprägten Wasserlöslichkeit nicht geeignet für den
Einsatz in Kraftwerken, da besonders beim An- und Abfahren der Anlage mit Kondensatbildung gerechnet werden
muß, verbunden mit einem Verlust an Katalysatorsubstanz.

Ähnliche Probleme treten bei kupferhaltigen Katalysatoren
auf. Wie z.B. in der EU-PS 0 024 061 beschrieben, müssen
diese in aufwendiger Weise periodisch regeneriert werden.

Es ist weiterhin aus der DE-AS 24 58 888 ein Verfahren
zur reduktiven Zerstörung von Stickoxiden in Abgasen
bekannt, bei dem ein Stickoxide, molekularen Sauerstoff
und Ammoniak enthaltendes Gasgemisch mit einer Katalysatorzusammensetzung in Berührung gebracht wird, die als
wesentliche Bestandteile (A) Titan in Form von Oxiden
in einem innigen Gemisch mit (B-1) Eisen in Form von
Oxiden und/oder Sulfaten und/oder (B-2) Molybdän, Wolfram,
Nickel, Kobalt, Kupfer, Chrom und Uran in Form von
Oxiden enthält.

Diese Katalysatorzusammensetzung soll eine ausgeprägte
Beständigkeit gegen das im Rauchgas enthaltene $SO_3$ bzw.
gegenüber der aus $SO_3$ und Wasserdampf gebildeten Schwefelsäure haben. Diese Katalysatorzusammensetzung hat jedoch
den Nachteil, daß ihre Selektivität noch unbefriedigend,
d.h. ihre Oxidationsaktivität gegenüber $SO_2$ noch verhältnismäßig hoch ist.

Aus der DE-AS 24 10 175 ist ferner ein Katalysator
aus Oxiden des Vanadiums, Molybdäns und/oder Wolframs
mit einem Metallatomverhältnis von

$$V_{12-x-y} \, Mo_x \, W_y$$

wobei $0 \leq x \leq 8, 0 \leq y \leq 5$ und

$0,3 \leq x + y \leq 8$

ist, bekannt.

Dieser Katalysator wird durch Vermischen eines Vanadiumoxids, komplexes oder -salzes mit einem Molybdänoxid,
-komplex oder -salz oder Molybdänsäure und/oder einem
Wolframoxid, -komplex oder -salz der Wolframsäure,
gegebenenfalls in Gegenwart eines Äthanolamins, Amins
oder von Oxalsäure als Komplexbildner herstellt. Über
das Verhalten gegenüber Schwefeloxiden werden jedoch
keine Angaben gemacht.

Die schädliche Wirkung des beim Einsatz der bekannten
Katalysatoren durch unselektive Oxidation des $SO_2$ entstehenden $SO_3$ (und der daraus gebildeten Schwefelsäure)
beschränkt sich nun aber nicht auf den zur Entfernung
von $NO_x$ verwendeten Katalysator; sie macht sich vielmehr
auch in den diesem Katalysator nachgeschalteten Anlagenteilen,
wie z.B. den Wärmetauscher des Luftvorwärmers geltend, die
durch $SO_3$ bzw. aus diesem und nicht abreagiertem $NH_3$
gebildeten Ammoniumsalze beeinträchtigt werden können.

Der Anteil des $SO_3$ am Gesamtschwefeloxidgehalt von Verbrennungsabgasen beträgt zwar in der Regel nur einige Prozent, doch weiß man, daß Vanadiumpentoxid bzw. das System $V_2O_5/TiO_2$ enthaltende Katalysatoren gute Oxidationskatalysatoren sind, die beispielsweise zur Herstellung von Phthalsäureanhydrid aus o-Xylol verwendet werden. Es besteht also die Gefahr, daß bei Einsatz der bekannten oxidationsaktiven Katalysatoren eine Oxidation des $SO_2$ zu $SO_3$ mit den geschilderten nachteiligen Folgen eintritt. Außerdem katalysieren diese bekannten Katalysatoren in Anwesenheit von Sauerstoff die Oxidation von $NH_3$, so daß Verluste an diesem Reduktionsmittel auftreten.

Der Erfindung liegt daher die Aufgabe zugrunde, einen Katalysator zur Verringerung des Stickoxidgehalts von Verbrennungsabgasen bereitzustellen, der eine hohen katalytische Aktivität für die selektive $NO_x$-Reduktion, insbesondere mit $NH_3$, zu $N_2$ und $H_2O$ in Gegenwart von Schwefeloxiden besitzt, dessen Oxidationsaktivität gegenüber $SO_2$ und $NH_3$ dagegen niedrig ist.

Diese Aufgabe kann überraschenderweise durch einen die Oxide von W und V enthaltenden Katalysator gelöst werden, der dadurch gekennzeichnet ist, daß die wirksame Komponente des Katalysators der allgemeinen Formel

$$W_a V_b E_c O_d$$

entspricht, worin E mindestens ein Element aus der Gruppe Bi, Ce, Cr, Sn, Zr, Mn darstellt, dessen Valenzstufe 4 nicht überschreitet und worin das Verhältnis

$$a : b : c = (0,1-15) : 1 : (0,1 - 25)$$

beträgt, während d die Zahl der zur Absättigung der Valenzen von W, V und E erforderlichen Sauerstoffatome beträgt, wobei der Katalysator durch innige Vermischung der Metalloxide und/oder in diese überführbarer Ausgangsverbindungen herstellbar ist, wobei die Ausgangsverbindungen in fester Form oder in gelöstem Zustand verwendet werden.

Die vorteilhaften Eigenschaften des erfindungsgemäßen Katalsators treten besonders ausgeprägt zu Tage, wenn das Verhältnis $a : b : c = (0,8-12) : 1 : (0,3-6)$ ist.

Zwar steht eine vollständige mechanistische Erklärung des Zusammenhangs zwischen der Aktivität bzw. Selektivität des erfindungsgemäßen Katalysators gegenüber $NO_x$, $SO_x$, $O_2$ und $NH_3$ und seiner Zusammensetzung zur Zeit noch aus, doch kann vermutet werden, daß die Atomverhältnisse der vorwiegend in Form ihrer Oxide vorliegenden Metallkomponenten eine solche mittlere, im Falle des Vanadiums zwischen vier und fünf liegende, Oxidationsstufe stabilisieren, die den Ablauf der an der Oberfläche des Katalysators stattfindenden Prozesse besonders begünstigen. Für den Fall, daß die Komponente E das Element Chrom bezeichnet, kommt der Kombination von Metalloxiden, welche einen Anionenmangel aufweisen (n-Halbleiter) mit einem einen Überschuß an Anionen enthaltenden Oxid (p-Halbleiter) besondere Bedeutung zu. Allgemein erweist sich darüberhinaus die erfindungsgemäße Kombination der Komponenten Wolframtrioxid udn Vanadiumpentoxid mit Metalloxiden niedrigerer Oxidationsstufe ($\leqslant 4$) als vorteilhaft.

Als Komponente E verwendet man vorzugsweise Chrom, Cer oder Mangan.

Als Ausgangsstoffe für die Herstellung der erfindungsgemäßen Katalysatoren verwendet man einmal die entsprechenden Metalloxide und zum anderen die in die Metalloxide überführbaren Substanzen, z.B. die Metalle, Hydroxide, Salze und Komplexverbindungen und/oder im Falle von W, V, Mn und Cr die Sauerstoffsäuren bzw. die von diesen Säuren abgeleiteten Salze und anderen Derivate. Es eignen sich z.B. Wolframoxide, wie $WO_3$, $W_{10}O_{29}$, $W_4O_{11}$, $WO_2$, Mono- und Polywolframsäuren, Heteropolysäuren, Wolframate, Wolframhalogenide und -oxyhalogenide. Im Falle des Vanadiums stellen unter anderem $V_2O_5$, $VO_2$, $V_2O_3$, $VO$ geeignete Ausgansverbindungen dar, sowie Ortho- und Polyvanadinsäure bzw. -vanadate, Vanadiumhalogenide und -oxyhalogenide, wie zum Beispiel $VOCl_3$, verschiedene Vanadium- bzw. Vanadylsalze. Beispiele für geeignete Chromverbindungen sind $CrO_3$, $Cr(OH)_3$, $Cr_2O_3$, Chromate bzw. Di- und Polychromate, Chromsäure bzw. deren Anhydrid, Chromyl- und Chromhalogenide sowie Komplexe des Chroms mit einer Vielzahl von Liganden. Mangan kann u.a. in Form seiner Oxide, in Form von $Mn(OH_2)$ $MnCl_2$, $MnSO_4$, $Na_3MnO_4$, $K_2MnO_4$ oder $KMnO_4$ verwendet werden. Cer kann z.B., ausgehend von $Ce_2O_3$, $CeO_2$, $Ce(SO_4)_2$, $Ce_2(CO_3)_3$ und $Ce_2(C_2O_4)_3$ eingesetzt werden.

Diese Ausgangsverbindungen können gegebenenfalls zusammen mit einem als Reduktionsmittel und/oder Komplexbildner wirkenden Zusatz verwendet werden.

Die Umsetzung der Ausgangsstoffe zu dem erfindungsgemäßen Katalysator kann in ansich bekannter Weise erfolgen, z.B. durch Fällung bzw. Mischfällung (Co-Präzipitation) Hydrolyse bzw. Eindampfen von vorzugsweise wäßrigen Lösungen, gefolgt von einer innigen Vermischung der Komponenten, z.B. durch Vermahlen in einer Kugelmühle.

Wenn die wirksame Komponente als Vollmaterial vorliegen soll, d.h. wenn kein Träger verwendet wird, kann die wirksame Komponente als Formkörper vorliegen, insbesondere in Form von Kugeln, Tabletten, Strangpreßlingen, langgestreckten oder flachen Wabenkörpern (letztere werden als "Kanalgitter" bezeichnet) Ringen, Wagenrädern oder Sattelkörpern.

Diese Formkörper können zum Beispiel durch Tablettieren oder Strangpressen der Katalysatormasse erhalten werden, wobei gegebenenfalls Zusätze, die die Verformbarkeit verbessern, beigemischt werden können. Derartige Zusätze sind beispielsweise Graphit oder Aluminiumstearat. Ferner können Zusätze, die die mechanische Festigkeit verbessern, beigemischt werden. Hierzu zählen beispielsweise Bindemittel, wie Kaolin und Bentonit. Weiterhin können Zusätze, die die Oberflächenstruktur verbessern, beigemischt werden. Hierbei handelt es sich zum Beispiel um organische Substanzen, die bei der anschließenden Calcinierung unter Zurücklassung einer porösen Struktur verbrennen.

Die Formgebung erfolgt im allgemeinen unter Zusatz von Wasser oder organischen Lösungsmitteln, zum Beispiel von ein- oder mehrwertigen Alkoholen.

Die erfindungsgemäßen Katalysatoren können ferner dadurch erhalten werden, daß die wirksame Komponente in einen Träger eingebaut oder als Schicht auf einen Träger aufgebracht wird. Das Einbringen der Katalysatorbestandteile in den Träger erfolgt durch Imprägnieren des vorgefertigten bzw. vorgeformten Trägermaterials mit Lösungen, vorzugsweise wäßrigen Lösungen der Katalysatorbestandteile, wobei diese Bestandteile einzeln oder durch Coimprägnieren in den Träger eingebracht werden können. Unter Umständen kann auch die Sprühimprägnierung von Vorteil sein.

Die wirksame Komponente kann aber auch in Form einer Schicht (wash-coating) auf den Träger aufgebracht werden. Diese Art der Aufbringung wird insbesondere bei nichtporösen Trägern angewendet.

Es ist auch möglich, die wirksame Komponente sowohl in den
Träger einzubringen als auch auf den Träger aufzubringen.
Das in den Poren des Trägers befindliche Katalysatormaterial ergibt dann einen guten Verbund mit dem auf der
Oberfläche des Trägers angeordneten Material.

Als Trägermaterialien kommen vor allem solche in Betracht,
die gegenüber Säuren weitgehend beständig sind. Als
typische Beispiele seien genannt: $\alpha$-Al$_2$O$_3$, Cordierit,
Mullit, Alumosilicate, Molekularsiebe, vorzugsweise solche
mit hohem Si/Al-Verhältnis und Siliciumcarbid. Weiterhin
kann die wirksame Komponente auf Metallträger, z.B. auf
korrosionsbeständige Bleche, aufgebracht werden.

Diese Bleche können vor dem Aufbringen der katalytisch
wirksamen Komponente z.B. zu Wabenkörpern geformt worden
sein.

Die erfindungsgemäßen Katalysatoren sind vorzugsweise dadurch gekennzeichnet, daß die wirksame Komponente durch
Calcinieren der Metalloxide und/oder der in diese überführbaren Ausgangsverbindungen bei Temperaturen von etwa
200 bis 700°C, vorzugsweise von etwa 300 bis 550°C, erhältlich ist. Bei der Calcinierung kann je nach der Zusammensetzung der Metalloxide bzw. der Ausgangsverbindungen im
Einzelfall entweder in einer oxidierenden, einer reduzierenden oder einer inerten Atmosphäre gearbeitet werden. Die
Calcinierung kann auch im Vakuum durchgeführt werden.

Durch die Calcinierung wird der Katalysator aktiviert und
erreicht auf diese Weise seine vorteilhaften Eigenschaften,
insbesondere wenn die vorstehend angegebenen Temperaturbereiche eingehalten werden. Wird z.B. bei Verwendung
von Chrom die Calcinierung bei einer zu niedrigen Temperatur
durchgeführt, so entsteht eine Chromoxidmodifikation,
welche zwar eine hohe Aktivität bei der Verringerung des
Stickoxidgehalts (Entstickungsaktivität) besitzt, sich aber hinsichtlich der Säurebeständigkeit und der $SO_2$-Oxidation nicht optimal verhält. Wird andererseits die Calciniertemperatur zu hoch gewählt, so erhält man einen Katalysator, der zwar die unerwünschte $SO_2$-Oxidation nicht begünstigt, und eine hohe Säurebeständigkeit hat, dessen Entstickungsaktivität aber geringer ist.

Typische Arbeitsweisen bei der Herstellung der erfindungsgemäßen Katalysatoren sind in den Beispielen 1 bis 14 beschrieben.

Gegenstand der Erfindung ist auch die Anwendung der erfindungsgemäßen Katalysatoren zur reduktiven Verringerung des Stickoxidgehalts von Verbrennungsabgasen, welche neben den üblichen Abgasbestandteilen auch Schwefeloxide ($SO_x$) enthalten. Als Reduktionsmittel wird vorzugsweise $NH_3$ verwendet, obgleich z.B. auch organische Reduktionsmittel, wie Methan oder Methanol, geeignet sind.

Bei der Reduktion mit Ammoniak wird der Stickoxidgehalt der Verbrennungsgase dadurch verringert, daß sich $N_2$ und $H_2O$ bilden. Als Stickoxide ($NO_x$) werden die verschiedenen Sauerstoffverbindungen des Stickstoffs bezeichnet, wie z.B. NO, $N_2O_3$, $NO_2$, $N_2O_5$; es handelt sich jedoch vorwiegend um NO und $NO_2$, wobei NO überwiegt.

Die $NO_x$-Konzentration der zu reinigenden Abgase kann in weiten Grenzen variieren, sie liegt im allgemeinen im Bereich von 100 Vol-ppm bis 5 Vol-%. Das molare Verhältnis $NH_3$ : $NO_x$ beträgt 0.3 bis 3, vorzugsweise 0,8-1,5 und kann durch regelungstechnische Maßnahmen in der Weise eingestellt werden, daß maximale $NO_x$-Umsätze bei möglichst niedrigem $NH_3$-Schlupf erzielt werden. Dabei kann das Reduktionsmittel ($NH_3$) sowohl gasförmig als auch in Form einer wäßrigen Lösung eindosiert werden.

10

Für die Entstickungsreaktion eignen sich prinzipiell sämtliche üblicherweise für heterogen katalysierte Gasphasenreaktionen verwendeten Reaktoren, sofern die Konstruktionsmerkmale des Reaktors den Durchsatz entsprechend hoher Rauchgasvolumenströme gestatten. Zulässige Raumgeschwindigkeiten (SV) liegen im Bereich von 500 bis 20 000, vorzugsweise zwischen 1000 und 15 000 Liter Gas je h und Liter Katalysator, wobei diese Raumgeschwindigkeiten sich auf ein Gas bei 0°C und 1 bar beziehen. Die Raumgeschwindigkeit wird nachstehend der Einfachheit halber mit der Dimension $h^{-1}$ bezeichnet. Geeignete Reaktionstemperaturen liegen im Bereich von etwa 200 bis 600°C, vorzugsweise von 270 bis 430°C. Besonders vorteilhaft ist der Einsatz des Katalysators bei Reaktionstemperaturen von 300-400°C, da in diesem Bereich durch das Zusammenwirken der Katalysatorkomponenten annähernd gleich hohe $NO_x$-Umsätze erzielt werden, so daß sich eine exakte Regelung der Temperatur erübrigt. Bei erheblich höheren Temperaturen kann eine teilweise Oxidation des Ammoniaks stattfinden, der damit der Reaktion mit den Stickoxiden entzogen wird, so daß der Entstickungsgrad sinken kann.

Im folgenden werden typische Beispiele für die Herstellung und Anwendung der erfindungsgemäßen Katalysatoren aufgeführt.

Die Wirksamkeit der Katalysatoren hinsichtlich der Beseitigung von Stickoxiden aus Gasgemischen, welche unter anderem auch Sauerstoff und Schwefeloxide enthalten, wird festgestellt durch Kontaktieren des Katalysators mit einem Gasstrom, welcher durch ein diesen Katalysator als Schüttgut enthaltendes, von außen elektrisch beheiztes Rohr geleitet wird. Das verwendete Gasgemisch hat folgende Zusammensetzung:

O₂  3 Vol-%

H₂O  10 Vol-%

NO  750 Vol-ppm

NO₂  50 Vol-ppm

NH₃  800 Vol-ppm

SO₂  950 Vol-ppm

SO₃  50 Vol-ppm

N₂  Differenz bezüglich 100 Vol-%

Die Konzentration der Komponenten NO, NO₂ und gegebenenfalls SO₂ im Gasgemisch wurde vor und nach Passieren der Katalysatorschüttgutschicht mittels geeichter, nach dem Chemolumineszenzverfahren (NO, NO₂) bzw. nach der nicht-dispersiven Infrarotspektroskopie (SO₂) arbeitenden Analysatoren kontinuierlich gemessen. Als Maß für die Wirksamkeit der Katalysatoren bezüglich der Reduktion der Stickoxide sowie der Unterdrückung der unerwünschten SO₂-Oxidation dient die Angabe der Umsatzgrade der Komponenten NO, NO₂ und SO₂ nach Einstellung des stationären Zustandes, definiert durch die folgenden Beziehungen:

$$\text{NO-Umsatz } (U_{NO}) = \frac{c_{NO}^{E} - c_{NO}^{A}}{c_{NO}^{E}} \cdot 100 \; [\%]$$

$$\text{NO}_2\text{-Umsatz } (U_{NO_2}) = \frac{c_{NO_2}^{E} - c_{NO_2}^{A}}{c_{NO_2}^{E}} \cdot 100 \; [\%]$$

$$\text{SO}_2\text{-Umsatz } (U_{SO_2}) = \frac{c_{SO_2}^{E} - c_{SO_2}^{A}}{c_{SO_2}^{E}} \cdot 100 \; [\%]$$

Dabei bezeichnen die Symbole $c_{NO}$, $c_{NO_2}$ und $c_{SO_2}$ die Konzentrationen von NO, NO₂ resp. SO₂, wobei sich die Superskripte E und A auf den Zustand des Gasgemisches vor bzw. nach Passieren des Katalysators beziehen.

## Beispiel 1

86,4 g Wolframsäure, 16,0 g durch thermische Zersetzung von Ammoniumetavanadat bei 450°C gewonnenes Vanadiumpentoxid und 43,5 g aus einer Lösung von Chromtrinitrat mittels $NH_3$ frisch gefällte Chrom(III)hydroxid werden eine Stunde in einer Kugelmühle vermahlen. Dann gibt man 32.0 g einer Mischung von Bentonit und Kaolin im Verhältnis 4 : 1 sowie 5 ml Glycerin zu und setzt den Mahlvorgang eine weitere Stunde fort. Die erhaltene Masse wird zu zylindrischen Strangpreßlingen vom Durchmesser 3 mm verformt, 3 Stunden bei 150°C getrocknet, worauf sich die Calcinierung zunächst eine Stunde bei 350°C, dann 3 Stunden bei 450°C anschließt. Der Katalysator weist bezüglich seiner aktiven Bestandteile die Zusammensetzung $W_{1.9}VCr_{2.3}O_{11.8}$ auf. Die auf eine Länge von ca. 5 mm zerkleinerten Strangpreßlinge werden einem Wirksamkeitstest unter den beschriebenen Bedingungen unterzogen, dessen Ergebnisse in Tabelle I enthalten sind.

## Beispiele 2 bis 5

Die Katalysatoren der Beispiele 2 bis 5 werden in Analogie zur Arbeitsweise des Beispiels 1 hergestellt; allerdings verwendet man an Stelle des Chrom (III)hydroxids die folgenden Bestandteile:

54,5 g Wismut(III)nitrat (Beispiel 2)
32,0 g Cer(IV)oxid, hergestellt durch Calcinieren von
   Cercarbonat (Beispiel 3)
32,0 g Zinn(IV)oxid (Beispiel 4)
32,0 g Zirkon(IV)oxid (Beispiel 5).

Tabelle I gibt die Zusammensetzung der wirksamen Katalysatorbestandteile sowie die Testergebnisse wieder. Die Beispiele 2 bis 5 machen deutlich, daß auch bei erfindungsgemäßer Verwendung von Katalysatoren, welche Oxide des Wismuts, des Cers, des Zinns sowie die Zirkons enthalten, eine hohe Wirksamkeit erzielt wird.

Tabelle I:

| Beispiel | Katalysator-zusammensetzung | SV $(h^{-1})$ | T $(^{\circ}C)$ | $U_{NO}$ $(\%)$ | $U_{NO_2}$ $(\%)$ |
|---|---|---|---|---|---|
| 1 | $W_{1.9}VCr_{2.3}O_{11.8}$ | 10 000 | 400 | 83 | 100 |
| " | " | 10 000 | 350 | 85 | 100 |
| " | " | 10 000 | 300 | 82 | 100 |
| " | " | 5 000 | 350 | 86 | 100 |
| 2 | $W_{1.9}VBi_{0.8}O_{9.4}$ | 10 000 | 400 | 71 | 100 |
| " | " | 10 000 | 350 | 68 | 90 |
| " | " | 10 000 | 300 | 60 | 90 |
| " | " | 5 000 | 350 | 80 | 100 |
| 3 | $W_{1.9}VCe_{2.1}O_{12.4}$ | 10 000 | 400 | 73 | 100 |
| " | " | 10 000 | 350 | 73 | 100 |
| " | " | 10 000 | 300 | 63 | 100 |
| " | " | 5 000 | 350 | 83 | 100 |
| " | $W_{1.9}VSn_{2.4}O_{12.9}$ | 10 000 | 400 | 66 | 100 |
| " | " | 10 000 | 350 | 64 | 90 |
| " | " | 10 000 | 300 | 60 | 80 |
| " | " | 5 000 | 350 | 81 | 100 |
| 5 | $W_{1.9}VZr_{2.9}O_{14.2}$ | 10 000 | 400 | 66 | 100 |
| " | " | 10 000 | 350 | 65 | 100 |
| " | " | 10 000 | 300 | 61 | 90 |
| " | " | 5 000 | 350 | 82 | 100 |

Beispiele 6 bis 10

Die Katalysatoren der Beispiele 6 bis 10 werden hergestellt, wie in Beispiel 1 beschrieben. Man setzt jedoch die Komponenten in folgenden Mengen ein:

0204064

| Beispiel | Wolframsäure | Vandium-pentoxid | Chrom(III)-hydroxid |
|----------|--------------|------------------|---------------------|
| 6        | 100.2g       | 3.2g             | 43.5g               |
| 7        | 95.0g        | 18.0g            | 43.5g               |
| 8        | 112.3g       | 16.0g            | 10.6g               |
| 9        | 103.7g       | 16.0g            | 21.1g               |
| 10       | 77.8g        | 16.0g            | 52.8g               |

Die resultierenden Zusammensetzungen sowie die Meßwerte
des Aktivitätstests faßt Tabelle II zusammen. Man
stellt fest, daß die erfindungsgemäßen Katalysatoren
eine hohe Aktivität bei der Reduktion der Stickoxide
in einem weiten Temperaturbereich besitzen.

Tabelle II

| Beispiel | Katalysator-zusammensetzung | SV ($h^{-1}$) | T (°C) | $U_{NO}$ (%) | $U_{NO_2}$ (%) |
|---|---|---|---|---|---|
| 6 | $W_{11.8}VCr_{12.3}O_{56.1}$ | 10 000 | 400 | 83 | 100 |
| " | " | 10 000 | 350 | 82 | 100 |
| " | " | 10 000 | 300 | 78 | 100 |
| " | " | 5 000 | 350 | 85 | 100 |
| 7 | $W_{4.3}VCr_{4.7}O_{22.4}$ | 10 000 | 400 | 81 | 100 |
| " | " | 10 000 | 350 | 82 | 100 |
| " | " | 10 000 | 300 | 80 | 100 |
| " | " | 5 000 | 350 | 86 | 100 |
| 8 | $W_{2.5}VCr_{0.6}O_{11.1}$ | 10 000 | 400 | 79 | 100 |
| " | " | 10 000 | 350 | 77 | 100 |
| " | " | 10 000 | 300 | 71 | 100 |
| " | " | 5 000 | 350 | 85 | 100 |
| 9 | $W_{2.4}VCr_{1.2}O_{11.4}$ | 10 000 | 400 | 78 | 100 |
| " | " | 10 000 | 350 | 79 | 100 |
| " | " | 10 000 | 300 | 75 | 90 |
| " | " | 5 000 | 350 | 86 | 100 |
| 1 | $W_{1.9}VCr_{2.3}O_{12.6}$ | 10 000 | 400 | 84 | 100 |
| " | " | 10 000 | 350 | 85 | 100 |
| " | " | 10 000 | 300 | 82 | 100 |
| " | " | 5 000 | 350 | 86 | 100 |
| 10 | $W_{1.8}VCr_{3.1}O_{12.6}$ | 10 000 | 400 | 74 | 100 |
| " | " | 10 000 | 350 | 77 | 90 |
| " | " | 10 000 | 300 | 75 | 100 |
| " | " | 5 000 | 350 | 81 | 100 |

Tabelle II

## Beispiel 11

43,2g Wolframsäure, 21,8 g frisch gefälltes Chrom(III)hydroxid, 80,0g Kieselgur und 40g einer Mischung von Bentonit und Kaolin im Verhältnis 4:1 werden nach Zugabe einer Lösung von 10,2 g Ammoniummetavanadat und 16,0 g Oxalsäure in 50 ml $H_2O$ gründlich vermahlen. Man fügt 160 ml einer ca. 15%igen Kieselsäuresollösung zu und extrudiert die innig vermischte Masse. Die Strangpreßlinge werden zunächst 2 Stunden bei 300°C, sodann 3 Stunden bei 450°C an der Luft calciniert. Das Produkt enthält die Oxide des Wolframs, des Vanadiums und des Chroms in Übereinstimmung mit Beispiel 1 im Verhältnis $W_{1.9}VCr_{2.3}O_{11.8}$, allerdings beträgt der Gehalt dieser aktiven Bestandteile nur 32% statt 80 %.

Die bei Einsatz einer dem Beispiel 1 entsprechenden Katalysatormasse erzielten NO-Umsätze betragen 86 % bei 400°C, 91 % bei 350°C sowie 83 % bei 300°C und SV = 5000h und zeigen, daß der Gehalt an aktiven Komponenten ohne Rückgang der spezifischen Aktivität deutlich vermindert werden kann.

## Beispiel 12

In die aus 10.5 g Ammoniummetavanadat und 16,5 g Oxalsäure in 150 ml $H_2O$ erhaltenen grünen Lösung trägt man portionsweise 21,5 g Chromsäure und 43,0 g Ammoniumparawolframat ein, wobei man durch Zugabe von 13%igem Ammoniak die ausfallende Wolframsäure in Lösung bringt. Man rührt 10 min. bei 60°C, gibt sodann den Katalysatorträger in Form von $SiO_2$-Kugeln vom Durchmesser 5 mm hinzu und setzt das Rühren weitere 15 min. fort. Der auf diese Weise imprägnierte Katalysator wird von der überschüssigen Lösung getrennt, 3 Stunden bei 120°C getrocknet und, wie im vorhergehenden Beispiel beschrieben, calciniert. Der Gehalt an aktiven Metalloxiden der Zusammensetzung $W_{1.9}VCr_{2.3}O_{11.8}$ beträgt 20,2 %. Tabelle III führt die bei der Entstickungsreaktion gemessenen Umsatzgrade auf.

Beispiel 13

Unter Verwendung von Cordieritringen (5x5x3 mm) als
Träger wird ein Katalysator auf die im Beispiel 12
beschriebene Weise präpariert, welcher 17,3 % an aktiven
Metalloxiden der genannten Zusammensetzung aufweist.
Die erzielten Ergebnisse sind in Tabelle 3 zusammengefaßt.

Tabelle III

| Beispiel | Katalysator-träger | SV $(h^{-1})$ | T $(°C)$ | $U_{NO}$ | $U_{NO_2}$ |
|----------|--------------------|---------------|----------|----------|------------|
| 12 | $SiO_2$ | 10 000 | 400 | 75 | 100 |
| " | " | 10 000 | 350 | 75 | 100 |
| " | " | 10 000 | 300 | 72 | 90 |
| " | " | 5 000 | 350 | 84 | 100 |
| 13 | Cordierit | 6 000 | 400 | 83 | 100 |
| " | " | 6 000 | 350 | 75 | 100 |
| " | " | 6 000 | 300 | 56 | 90 |

Beispiel 14

Ein gemäß Beispiel 1 hergestellter Katalysator wird
einem Dauertest bei einer Reaktionstemperatur von 350°C
und einer Raumgeschwindigkeit von 5000 $h^{-1}$ unterzogen.
Die folgenden Meßwerte zeigen, daß der Katalysator seine
Wirksamkeit auch bei langer Einsatzdauer behält.

Tabelle IV 18

0204064

| Reaktionsdauer (h) | $U_{NO}$ | $U_{NO_2}$ |
|---|---|---|
| 10 | 84 | 100 |
| 50 | 86 | 100 |
| 100 | 85 | 100 |
| 200 | 85 | 100 |

Vergleichsbeispiel 1

Ein aus der Patentliteratur (DE-AS 24 10 715) bekannter Vanadium/Wolfram-Katalysator (atomare Zusammensetzung $V_{11.7}W_{0.3}O_{30.2}$ wurde gemäß dieser Angaben hergestellt und einem Aktivitätstest analog den Beispielen 1-13 unterzogen. Als Maß für die Oxidationsaktivität wurde der $SO_2$-Umsatz bestimmt.

In Tabelle V sind die Meßwerte den bei Verwendung des erfindungsgemäßen, nach den Angaben des Beispiels 1 hergestellten Katalysators erhaltenen Ergebnissen gegenübergestellt.

Zwar erweist sich auch der Vergleichskatalysator als bedingt geeignet zur Verringerung des Stickoxidgehalts, doch fördert er im gesamten Temperaturbereich die Bildung des schädlichen Schwefeltrioxids. Die nachteilige Oxidationsaktivität dieses Katalysators äußert sich darüberhinaus auch gegenüber dem Reduktionsmittel Ammoniak, so daß der $NO_x$-Umsatz insbesondere bei hohen Reaktionstemperaturen deutlich erniedrigt wird.

Tabelle V

| Katalysatorzu-sammensetzung | SV ($h^{-1}$) | T (°C) | $U_{NO}$ (%) | $U_{SO_2}$ (%) |
|---|---|---|---|---|
| $W_{1.9}VCr_{2.3}O_{11.8}$ | 5000 | 300 | 84 | <1.0 |
| " | 5000 | 350 | 86 | <1.0 |
| " | 5000 | 400 | 86 | <1.0 |
| $W_{0.3}V_{11.7}O_{0.2}$ | 5000 | 300 | 77 | 2.5 |
| " | 5000 | 350 | 79 | 6.6 |
| " | 5000 | 400 | 72 | 11.0 |

1

Katalysator zur Verringerung des Stickoxidgehalts von Verbrennungsabgasen


PATENTANSPRÜCHE
_____


1.   Katalysator zur Verringerung des Stickoxidgehalts
von Verbrennungsabgasen, enthaltend die Oxide von W und V,
dadurch gekennzeichnet, daß die wirksame Komponente des
Katalysators der allgemeinen Formel

$$W_a V_b E_c O_d$$

entspricht, worin E mindestens ein Element aus der Gruppe Bi,
Ce, Cr, Sn, Zr, Mn darstellt, dessen Valenzstufe 4 nicht
überschreitet und worin das Verhältnis

$$a : b : c = (0,1-15) : 1 : (0,1 - 25)$$

beträgt, während d die Zahl der zur Absättigung der Valenzen
von W, V und E erforderlichen Sauerstoffatome beträgt, wobei
der Katalysator durch innige Vermischung der Metalloxide
und/oder in diese überführbarer Ausgangsverbindungen herstellbar ist, wobei die Ausgangsverbindungen in fester Form oder

Konten: Deutsche Bank AG, München, Konto-Nr. 2014 009 · Postgiro: München 600 60-807

in gelöstem Zustand verwendet werden.

2. Katalysator nach Anspruch 1, dadurch gekennzeichnet, daß das Verhältnis

$$a : b : c = (0,8-12) : 1 : (0,3-6)$$

beträgt.

3. Katalysator nach Anspruch 1 oder 2, dadurch gekennzeichnet, daß das Element E Chrom darstellt.

4. Katalysator nach Anspruch 1 oder 2, dadurch gekennzeichnet, daß das Element E Cer oder Mangan darstellt.

5. Katalysator nach einem der Ansprüche 1 bis 4, dadurch gekennzeichnet, daß die Ausgangsverbindungen in die Metalloxide überführbare Salze, Komplexverbindungen und/oder Säuren von W, V und E bzw. die von den Säuren abgeleiteten Salze darstellen und gegebenenfalls zusammen mit einem als Reduktionsmittel und/oder Komplexbildner wirkenden Zusatz verwendet werden.

6. Katalysator nach einem der Ansprüche 1 bis 5, dadurch gekennzeichnet, daß die wirksame Komponente als Vollmaterial vorliegt.

7. Katalysator nach einem der Ansprüche 1 bis 6, dadurch gekennzeichnet, daß die wirksame Komponente als Formkörper, insbesondere in Form von Kugeln, Tabletten, Strangpreßlingen, langgestreckten oder flachen Wabenkörpern, Ringen, Wagenrädern oder Sattelkörpern vorliegt.

8. Katalysator nach Anspruch 7, dadurch gekennzeichnet, daß die Formkörper durch Tablettieren oder Strangpressen, gegebenenfalls unter Beimischung von die Verformbarkeit, die mechanische Festigkeit und/oder die Oberflächenstruktur verbessernden Zusätzen erhältlich sind.

9. Katalysator nach einem der Ansprüche 1 bis 5, dadurch gekennzeichnet, daß die wirksame Komponente in einen Träger eingebaut oder als Schicht auf einen Träger aufgebracht ist.

10. Katalysator nach einem der Ansprüche 1 bis 9, dadurch gekennzeichnet, daß die wirksame Komponente durch Calcinieren der Metalloxide und/oder der in diese überführbaren Ausgangsverbindungen bei Temperaturen von 200 bis 700°C, vorzugsweise von 300 bis 550°C, erhältlich ist.

11. Anwendung des Katalysators nach einem der Ansprüche 1 bis 10 zu reduktiven Verringerung des Stickoxidgehalts von Verbrennungsabgasen, welche neben den üblichen Abgasbestandteilen auch Schwefeloxide enthalten.

12. Anwendung nach Anspruch 11, im Temperaturbereich von 200 bis 600°C, vorzugsweise von 270 bis 430°C, und bei einer Raumgeschwindigkeit im Bereich von 500 bis 20 000 Liter Gas je Stunde und Liter Katalysator.

13. Anwendung nach Anspruch 11 oder 12, dadurch gekennzeichnet, daß als Reduktionsmittel $NH_3$ verwendet wird.